Europäisches Patentamt

European Patent Office

Office européen des brevets

(11) EP 0 727 898 B1

(19)

(12) **EUROPÄISCHE PATENTSCHRIFT**

(45) Veröffentlichungstag und Bekanntmachung des Hinweises auf die Patenterteilung:
**25.09.1996  Patentblatt 1996/39**

(51) Int Cl.$^6$: **H04M 1/66**

(21) Anmeldenummer: **95108824.4**

(22) Anmeldetag: **08.06.1995**

(54) **Telefonstation**

Telephone station

Station téléphonique

(84) Benannte Vertragsstaaten:
**AT BE CH DE DK ES FR GB GR IE LI NL PT SE**

(30) Priorität: **10.02.1995  CH 391/95**

(43) Veröffentlichungstag der Anmeldung:
**21.08.1996  Patentblatt 1996/34**

(73) Patentinhaber: **Landis & Gyr Technology Innovation AG**
**CH-6301 Zug (CH)**

(72) Erfinder:
• **Seitz, Thomas**
**CH-1202 Genève (CH)**
• **Falk, Urs**
**CH-6312 Steinhausen (CH)**

(56) Entgegenhaltungen:
**FR-A- 2 434 529          US-A- 4 759 054**
**US-A- 5 086 459**

**Beschreibung**

Die Erfindung betrifft eine Telefonstation der im Oberbegriff des Anspruchs 1 genannten Art.

Der Erfindung liegt die Aufgabe zugrunde, eine Telefonstation mit einer Betrugssicherheitseinrichtung vorzuschlagen, die jeden betrügerischen Versuch, von der Telefonstation aus ohne Bezahlung der auflaufenden Gebühren zu telefonieren, unterbindet. Eine Telefonstation mit einer Betrugssicherheitseinrichtung ist z. B. aus FR-A-2 434 529 bekannt.

Die genannte Aufgabe wird erfindungsgemäss gelöst durch die Merkmale der Ansprüche 1 und 7. Vorteilhafte Ausgestaltungen ergeben sich aus den abhängigen Ansprüchen.

Nachfolgend werden Ausführungsbeispiele der Erfindung anhand der Zeichnung näher erläutert.

Es zeigen:

Fig. 1    ein elektrisches Schema einer mit einer Telefonzentrale verbundenen Telefonstation,
Fig. 2    eine Messschaltung,
Fig. 3    eine Magnetisierungskurve und Signalformen,
Fig. 4    eine Magnetisierungskurve und Strom- und Spannungsverläufe, und
Fig. 5    eine Messschaltung zur Messung der Eingangsimpedanz eines Transformators.

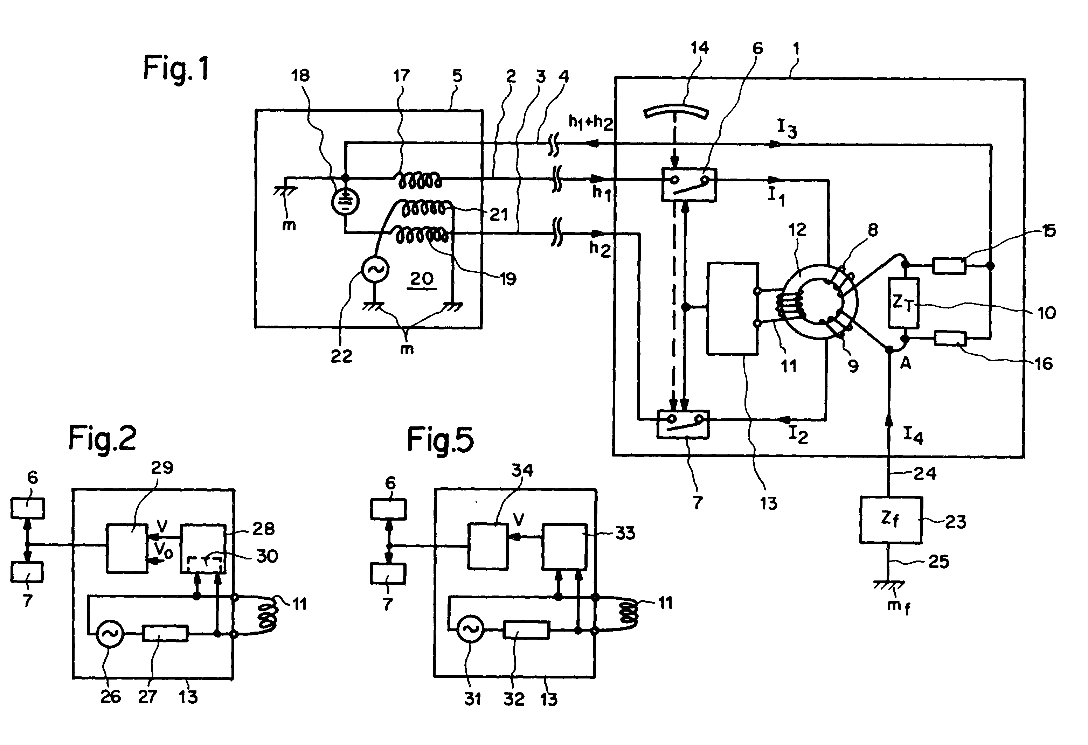

Die Fig. 1 zeigt das elektrische Schaltbild einer öffentlichen Telefonstation 1, die über drei Leitungen 2, 3 und 4 mit einer Telefonzentrale 5 verbunden ist. Sie weist zwei Schalter 6 und 7, eine erste und eine zweite Spule 8 bzw. 9, ein Schaltungsteil 10, eine Messspule 11, einen Körper 12 aus magnetischem Material und eine Messschaltung 13 auf. Der Schalter 6, die erste Spule 8, das Schaltungsteil 10, die zweite Spule 9 und der Schalter 7 sind elektrisch in Reihe geschaltet. Die Schalter 6 und 7 sind ausgangsseitig mit den Leitungen 2 bzw. 3 verbunden und werden durch den Hörer 14 der Telefonstation 1 betätigt. Sie sind geöffnet, wenn der Hörer 14 aufgelegt ist, sie sind geschlossen, wenn der Hörer 14 abgehoben ist. Das Schaltungsteil 10 weist zwei Anschlüsse auf, die über je einen Widerstand 15 bzw. 16 mit der Leitung 4 verbunden sind. Das Schaltungsteil 10 ist das eigentliche Kernstück der Telefonstation 1. Es stellt elektrisch gesehen eine Impedanz $Z_T$ dar. Weitere Details über den Aufbau des Schaltungsteiles 10 sind für das Verständnis der Erfindung nicht wesentlich und deshalb nicht beschrieben.

Innerhalb der Telefonzentrale 5 ist die erste Leitung 2 über eine Spule 17 mit einem geerdeten Punkt m, mit der als Masseleitung dienenden Leitung 4 und mit dem Pluspol einer Gleichspannungsquelle 18 verbunden. Die zweite Leitung 3 ist über eine Spule 19 mit dem Minuspol der Gleichspannungsquelle 18 verbunden. Die Telefonzentrale 5 weist einen geerdeten Schaltkreis 20 mit einer Spule 21 und einem Wechselspannungsgenerator 22 auf, die unter anderem der Aufmodulation von Taximpulsen auf die beiden Linienleitungen 2 und 3 dienen. Die Taximpulse sind wechselförmige Signale, die in der Regel eine Frequenz von 50 Hz aufweisen. Die Taximpulse werden vom Schaltungsteil 10 der Telefonstation 1 empfangen und beispielsweise zur unmittelbaren Abbuchung eines durch den Einwurf von Münzen oder ähnlichen Zahlungsmitteln entstandenen Guthabens verwendet. Es ist auch möglich, dass die Telefonstation 1 die Taximpulse vorerst aufaddiert und später zur Rechnungsstellung verwendet, z.B. bei der bargeldlosen Bezahlung mittels einer Kreditkarte oder einer Chipkarte.

An die Telefonstation 1 ist eine elektrische Schaltung 23 in betrügerischer Absicht angeschlossen. Ein erster Zuleitungsdraht 24 der Schaltung 23 steht in elektrischer Verbindung mit einem Abgriff A der Telefonstation 1, der sich zwischen dem Schaltungsteil 10 und der zweiten Spule 9 befindet. Ein zweiter Zuleitungsdraht 25 der Schaltung 23 ist mit einem geerdeten Punkt $m_f$ verbunden. Die Schaltung 23 stellt elektrisch gesehen eine Impedanz $Z_f$ dar, die zwischen den beiden Zuleitungsdrähten 24 und 25 angeordnet ist. Die Schaltung 23 kann je nach Betrugsart ein Telefon oder eine Schaltung zur Schwächung der Taximpulse sein.

Bei abgehobenem Hörer 14 schliesst sich ein Gleichstromkreis: Durch die erste Leitung 2 fliesst ein Gleichstrom $I_1$ vom Pluspol der Gleichspannungsquelle 18 über das Schaltungsteil 10 zum Abgriff A, durch die zweite Leitung 3 fliesst ein Gleichstrom $I_2$ vom Abgriff A zum Minuspol der Gleichspannungsquelle 18 und durch die Masseleitung 4 fliesst ein weiterer Gleichstrom $I_3$ vom Pluspol der Gleichspannungsquelle 18 zum Abgriff A. Die Gleichströme sind verknüpft durch die Beziehung $I_2 = I_1 + I_3$. Die Gleichströme $I_1$ und $I_2$ liegen in der Grössenordnung von 100 mA. Der Gleichstrom $I_3$ ist sehr klein im Vergleich zu den Gleichströmen $I_1$ und $I_2$, da die Widerstände 15 und 16 im Vergleich zur Impedanz $Z_T$ des Schaltungsteils 10 sehr hochohmig gewählt sind. Auf diese Weise ist die Telefonstation 1 über die zwei Linienleitungen 2 und 3 von der Telefonzentrale 5 mit elektrischer Energie speisbar.

Die Taximpulse stellen wechselförmige Stromimpulse $h_1$ und $h_2$ dar, die von der Telefonzentrale 5 auf beiden Linienleitungen 2 und 3 parallel zur Telefonstation 1 gelangen und über die Widerstände 15 bzw. 16 und die Masseleitung 4 gegen Erde fliessen. Die Stärke der Stromimpulse $h_1$ und $h_2$ beträgt in der Regel einige oder einige zehn Mikroampère und ist damit sehr klein gegen die Stärke der Gleichströme $I_1$ und $I_2$.

Ist keine Schaltung 23 in betrügerischer Absicht mit dem Abgriff A verbunden, dann sind die beiden Gleichströme $I_1$ und $I_2$ betragsmässig beinahe gleich gross. Ist als Schaltung 23 jedoch ein Telefon angeschlossen, dann fliesst ein weiterer Strom $I_4$ von der Erde $m_f$ über die Impedanz $Z_f$ zum Abgriff A und zum Minuspol der Gleichspannungsquelle 18. Nach der Knotenregel gilt $I_2 = I_1 + I_3 + I_4$.

Die Spulen 8 und 9, die Messspule 11, der magnetische Körper 12 und die Messschaltung 13 stellen eine Einrichtung dar zur Verhinderung von Betrugsversuchen mittels eines Telefons 23. Die Spulen 8 und 9 sind, wie dargestellt, in gegenläufigem Wicklungssinn um den Körper 12 gewickelt und weisen die gleiche Zahl $N_1$ an Windungen auf. Der Körper 12 ist als Torus ausgebildet. Die durch die Spulen 8 und 9 fliessenden Gleichströme $I_1$ bzw. $I_2$ erzeugen im Torus 12 ein Magnetfeld $H_{\Delta I}$, das proportional ist zur Differenz der Gleichströme $\Delta I = I_1 - I_2$ und zur Windungszahl $N_1$ : $H_{\Delta I} \sim \Delta I * N_1$. Die Messspule 11 ist ebenfalls um den Torus 12 gewickelt.

Die Fig. 2 zeigt eine erste Ausführung der Messschaltung 13, die eine mit den beiden Anschlüssen der Messspule 11 verbundene Wechselstromquelle, die aus einer Wechselspannungsquelle 26 und einem Widerstand 27 gebildet ist, welche in Reihe geschaltet sind, eine Spannungsmesseinrichtung 28 zur Messung der über der Messspule 11 liegenden Spannung und eine Vergleichsschaltung 29 umfasst. Die Spannungsmesseinrichtung 28 gibt eine Gleichspannung V ab, welche die Vergleichsschaltung 29 mit einem vorbestimmten Schwellwert $V_0$ vergleicht. Die Vergleichsschaltung 29 liefert an ihrem Ausgang ein binäres Signal, das die Werte "0" oder "1" annehmen kann. Der Wert "0" bedeutet, dass die Gleichspannung V grösser als der Wert $V_0$ ist, der Wert "1" bedeutet, dass die Gleichspannung V kleiner als der Wert $V_0$ ist. Der Ausgang der Vergleichsschaltung 29 ist so aufdie Schalter 6 und 7 geführt, dass das Signal "0" die Stellung der Schalter 6 und 7 unverändert lässt und dass das Signal "1" das Öffnen der Schalter 6 und 7 bewirkt.

Beim Öffnen der Schalter 6 und 7 ist die Versorgung der Telefonstation 1 mit elektrischer Energie von der Telefonzentrale 5 her nicht mehr möglich. Damit die Schalter 6 und 7 beim Wegfall der Energieversorgung bei abgehobenem Hörer 14 nicht sofort wieder schliessen, sondern erst nach dem Auflegen und erneuten Abheben des Hörers 14, sind sie als bistabile Schalter, beispielsweise als bistabile Relais, ausgeführt. Falls das Telefon 23 nach dem erneuten Abheben des Hörers 14 noch immer angeschlossen ist, bewirkt die Messschaltung 13 sofort wieder das Öffnen der Schalter 6 und 7.

Die Messspule 11 dient einerseits zusammen mit der Wechselstromquelle 26, 27 der Erzeugung eines wechselförmigen Magnetfeldes $H_M(t)$ im Torus 12, das sich dem von den Gleichströmen $I_1$ und $I_2$ erzeugten Magnetfeld $H_{\Delta I}$ überlagert. Andererseits dient die Messspule 11 der Messung der zeitlichen Ableitung der sich im Torus 12 aufgrund der Magnetisierungskurve B (H) einstellenden magnetischen Induktion B(t). Diese beiden Funktionen könnten auch mittels zwei Messspulen verwirklicht werden.

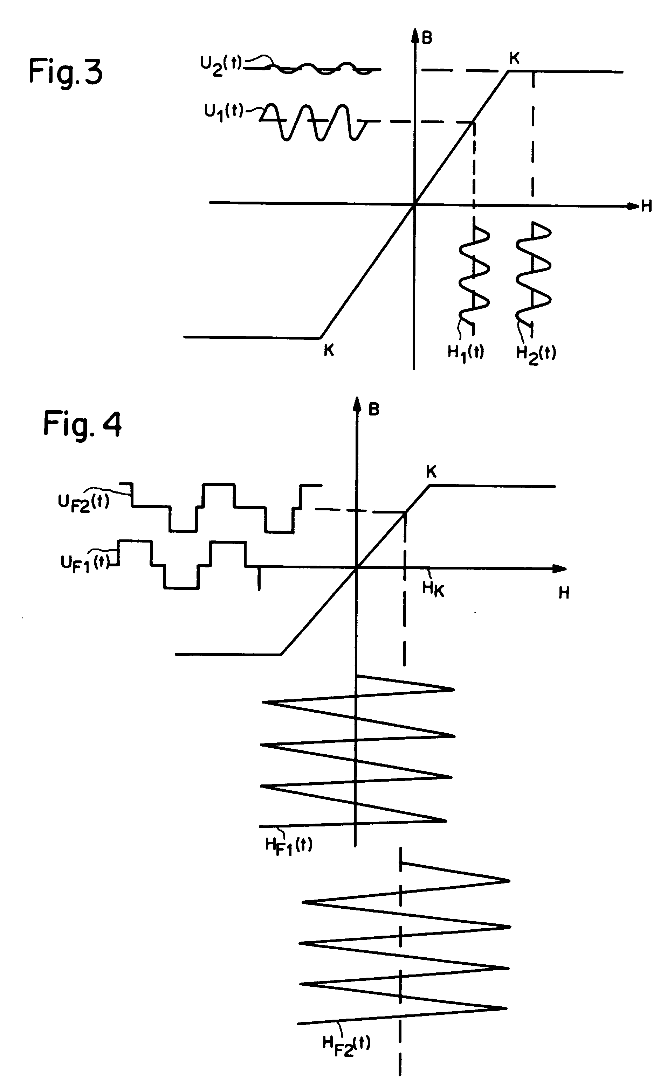

In einer ersten Ausführung besteht der Torus 12 (Fig. 1) aus einem weichmagnetischen Material, das eine Magnetisierungskurve B(H) aufweist, wie sie qualitativ dargestellt ist in der Fig. 3. Für Magnetfelder H, deren Absolutwert unterhalb eines Wertes $H_K$ liegt, ist die magnetische Induktion B(H) proportional zu H und die Steigung dB/dH, d.h. die magnetische Permeabilität $\mu_r$, gross gegen den Wert eins: $\mu_r \gg 1$. Für Magnetfelder H, deren Absolutwert oberhalb des Wertes $H_K$ liegt, ist die Steigung dB/dH viel kleiner. Das magnetische Material kommt oder ist in Sättigung: die magnetische Permeabilität $\mu_r$ nähert sich dem Wert eins. Beim Feld $H_K$ weist die Magnetisierungskurve B(H) den bekannten Knickpunkt K auf. Die Zahl $N_1$ der Windungen der Spulen 8 und 9 ist nun mit $N_1 = 25$ so festgelegt, dass eine Stromdifferenz von $\Delta I = 2$ mA ein Magnetfeld $H_{\Delta I}$ erzeugt, das kleiner als das Feld $H_K$ ist und den Torus 12 somit magnetisch nicht in Sättigung bringt, und dass eine Stromdifferenz von $\Delta I = 4$ mA ein Magnetfeld $H_{\Delta I}$ erzeugt, das eindeutig grösser als das Feld $H_K$ ist und den Torus 12 in Sättigung bringt. Das magnetische Material muss die Eigenschaft aufweisen, dass der Übergang von einer grossen Permeabilität zu einer kleinen Permeabilität in einem Bereich $\Delta H$ erfolgt, der vergleichsweise klein gegen den Wert $H_K$ ist: $\Delta H \ll H_K$, so dass die maximal zulässige Stromdifferenz $\Delta I_S$, welche noch nicht als Betrugsversuch interpretiert wird, gut definierbar ist. Im Fachjargon spricht man von einem scharfen Knickpunkt.

Die Wechselspannungsquelle 26 erzeugt eine Wechselspannung mit einer Frequenz $\omega_M$, die irgendwo im Bereich von etwa 5 bis 100 kHz liegt, der Widerstand 27 weist einen Wert von etwa 10 k$\Omega$ auf. Dieser Wert ist gross gewählt gegen den Betrag der Impedanz der Messspule 11 bei der Frequenz $\omega_M$, so dass durch die Messspule 11 ein Wechselstrom $I_M(t)$ von vorbestimmter, relativ kleiner Amplitude fliesst. Der Wechselstrom $I_M(t)$ erzeugt ein Messfeld $H_M(t)$ im Torus 12, das sich dem Feld $H_{\Delta I}$ überlagert. Das Messfeld $H_M(t)$ ist proportional zum Wechselstrom $I_M(t)$ und zur Zahl $N_2$ der Windungen der Messspule 11, die etwa $N_2 = 250$ beträgt. Die hohe Windungszahl $N_2$ dient der Erzeugung eines relativ starken Messfeldes $H_M(t)$ bei vergleichsweise kleinem Wechselstrom $I_M(t)$ von einigen $\mu A$, so dass die Messschaltung 13 wenig Energie verbraucht. Bei einem Wechselstrom $I_M(t)$ von 10 $\mu A$ ist das Messfeld $H_M(t)$ etwa um den Faktor 20 kleiner als das Magnetfeld $H_{\Delta I}$ bei einer Stromdifferenz von $\Delta I = 2$ mA. Die Spannungsmesseinrichtung 28 misst die über der Messspule 11 liegende Spannung U(t), die proportional ist zur zeitlichen Ableitung des magnetischen Flusses $\phi(t)$ durch die Messspule 11 und somit auch proportional zur zeitlichen Ableitung der magnetischen Induktion B(t), die sich aufgrund des Magnetfeldes $H(t) = H_{\Delta I} + H_M(t)$ im Torus 12 einstellt.

Die Fig. 3 zeigt neben der hystereselosen Magnetisierungskurve B(H) bzw. B($\Delta I$), Magnetfelder $H_1(t) = H_{\Delta I,1} + H_M(t)$ und $H_2(t) = H_{\Delta I,2} + H_M(t)$ und die sich ergebenden Spannungen $U(t) = U_1$ bzw. $U(t) = U_2(t)$, wobei die Stromdifferenz im ersten Fall $\Delta I_1 = 2$ mA und im zweiten Fall $\Delta I_2 = 4$ mA beträgt. Die Amplituden des Magnetfeldes $H_M(t)$ und der Spannungen $U_1(t)$ und $U_2$ (t) sind der Illustration wegen vergrössert dargestellt.

Die Form des die Messspule 11 erregenden Wechselstromes ist nicht von besonderer Bedeutung. Einfach erzeugbar ist ein sägenhnförmiger Wechselstrom.

Das Magnetfeld $H_1(t)$ bringt den Torus 12 (Fig. 1) nach wie vor nicht in Sättigung, so dass die zeitliche Variation der sich im Torus 12 einstellenden magnetischen Induktion B(t) entsprechend der grossen Steigung dB/dH der Magnetisierungskurve B(H) vor dem Knickpunkt K in der Messspule 11 eine Spannung $U_1(t)$ mit einer vergleichsweise grossen Amplitude erzeugt. Beim Magnetfeld $H_2(t)$ ist der Torus 12 des Gleichfeldanteiles $H_{\Delta I,2}$ magnetisch gesättigt, so dass das Feld B(t) entsprechend der Steigung dB/dH der Magnetisierungskurve B(H) nach dem Knickpunkt K nur sehr schwache zeitliche Änderungen erfährt. Die Amplitude der Spannung $U_2(t)$ ist deshalb verschwindend klein. Die Spannungen $U_1(t)$ und $U_2(t)$ sind wechselförmig und weisen keinen Gleichspannungsanteil auf

Die Spannungsmesseinrichtung 28 erzeugt im ersten Fall, d.h. bei Vorliegen der Spannung $U_1(t)$, eine Gleichspannung V, die grösser als der Wert $V_0$ ist. Im zweiten Fall, d.h. bei Vorliegen der Spannung $U_2(t)$, ist die Gleichspannung V kleiner als der Wert $V_0$ Eine Differenz $\Delta I$ der beiden Gleichströme $I_1$ und $I_2$, die grösser als der vorbestimmte Schwellwert $\Delta I_S$ ist, bewirkt somit das Öffnen der Schalter 6 und 7. Somit ist die Telefonstation 1 eingerichtet, jeden Versuch, mit einem Telefon 23 zu telefonieren, das wie oben beschrieben an die Telefonstation 1 angeschlossen ist, zu erkennen und zu unterbinden.

Die in der Fig. 3 dargestellte Magnetisierungskurve B(H) entspricht dem Idealfall. In Wirklichkeit zeigt jedes ferromagnetische Material Hystereseeffekte, die sich in Form einer endlichen Remanenz $B_r$ und einer endlichen Koerzitivfeldstärke $H_c$ äussern. Damit die Messeinrichtung nach einem erfolglos abgebrochenen Betrugsversuch selbsttätig wieder einwandfrei funktioniert, ist es erforderlich, dass die Remanenz $B_r$ des magnetischen Materials genügend klein ist. Eine kleine Remanenz $B_r$ bedeutet nämlich in diesem Zusammenhang, dass das magnetische Feld B im Torus 12 einen deutlich unter dem Sättigungswert $B(H_K)$ liegenden Wert annimmt, sobald die Differenz $\Delta I$ der Ströme $I_1$ und $I_2$ und damit auch das von ihnen erzeugte Magnetfeld $H_{\Delta I}$ verschwindet. Dank der grossen Permeabilität $\mu_r$ bedeutet eine kleine Remanenz $B_r$ auch eine kleine Koerzitivfeldstärke $H_c$. Materialien, die einer solchen idealen Magnetisierungskurve B(H) sehr nahe kommen, sind beispielsweise Metallgläser, das sind amorphe ferromagnetische Materialien. Ein Metallglas mit einer kleinen Remanenz $B_r$ und einer kleinen Koerzitivfeldstärke $H_c$ ist unter der Bezeichnung VITROVAC 6025 F im Handel erhältlich. Dieses Metallglas weist eine Queranisotropie auf, die zu einer sogenannten F-Schleifencharakterisik der Magnetisierungskurve B(H) führt.

Bei einer zweiten Ausführung betreibt die Messschaltung 13 (Fig. 2) die Messspule 11 als sogenannten Fluxgate Sensor. Zu diesem Zweck ist die Wechselstromquelle 26, 27 anders bemessen, weist die Spannungsmesseinrichtung 28 ein Bandpassfilter 30 auf und ist der Vergleichsschaltung 29 ein Inverter nachgeschaltet. Die aus der Wechselspannungsquelle 26 und dem Widerstand 27 gebildete Stromquelle liefert einen vorzugsweise sägezahnförmigen Wechselstrom $I_F$ mit einer Grundfrequenz $\omega_F$, wobei dessen Amplitude und die Anzahl $N_2$ der Windungen der Messspule 11 so aufeinander abgestimmt sind, dass das vom Wechselstrom $I_F$ in der Messspule 11 erzeugte Magnetfeld $H_F$ den Torus 12 periodisch in Sättigung bringt, d.h. die Amplitude des Wechselstromes $I_F$ erzeugt ein Magnetfeld H, das grösser ist als das Feld $H_K$. Das Bandpassfilter 30 ist für wenigstens eine gerade Oberwelle der Grundfrequenz $\omega_F$ durchlässig, vorzugsweise für die erste gerade Oberwelle mit der Frequenz $2^*\omega_F$.

Die Fig. 4 zeigt den zeitlichen Verlauf des Magnetfeldes $H_F(t) = H_{F1}(t)$ bzw. $H_F(t) = H_{F2}(t)$ und der Spannung $U(t) = U_{F1}(t)$ bzw. $U(t) = U_{F2}(t)$ über der Messspule 11. Im ersten Fall beträgt die zu messende Stromdifferenz $\Delta I$ null. Somit ist das Magnetfeld $H_{F1}(t)$ ohne Gleichfeldanteil. Die Spannung $U_{F1}(t)$, die wiederum proportional zur zeitlichen Änderung des magnetischen Flusses $\phi(t)$ und somit proportional zur zeitlichen Änderung des Magnetfeldes B(t) ist, nimmt einen aus positiven und negativen Rechteckimpulsen gebildeten Verlauf an. Die positiven und negativen Rechteckimpulse der Spannung $U_{F1}(t)$ weisen eine gerade Kurvenform auf und das Frequenzspektrum der Spannung $U_{F1}(t)$ enthält nur ungerade Oberwellen. Am Ausgang der Spannungsmesseinrichtung 28 ist eine verschwindende Gleichspannung V vorhanden und die Vergleichsschaltung 29 führt das Signal "1". Mit zunehmender Stromdifferenz $\Delta I$ nimmt der Gleichfeldanteil des Magnetfeldes $H_{F2}(t)$ zu. Wegen der Aussteuerung des Torus 12 bis in die magnetische Sättigung ändern die positiven und negativen Rechteckimpulse Länge und Lage auf der Zeitachse und das Frequenzspektrum der Spannung $U_{F2}(t)$ zeigt auch gerade Oberwellen. Dank des vorgeschalteten Bandpassfilters 30 misst die Spannungsmesseinrichtung 28 die Stärke der zweiten Oberwelle. Die Gleichspannung V nimmt zu mit zunehmender Stromdifferenz $\Delta I$. Übersteigt die Gleichspannung V den Wert $V_0$, dann führt die Vergleichsschaltung 29 ein Ausgangssignal "0". Über den Wert $V_0$ ist der Schwellwert $\Delta I_S$ kontrollierbar, bei dem der Pegel des Ausgangssignales der Vergleichsschaltung 29 ändert. Der der Vergleichsschaltung 29 nachgeschaltete Inverter kehrt die Signalpegel um, so dass die Steuerung der Schalter 6 und 7 wie in dem vorgängig beschriebenen Verfahren erfolgen kann.

Bei diesem zweiten Schaltungsaufbau ist es auch möglich, als Material für den Torus 12 anstelle des Magnetglases ein ferromagnetisches Material einzusetzen, das die bekannten Hystereseeffekte zeigt, wie z.B. Permalloy. Die Spannungen $U_{F1}(t)$ und $U_{F2}(t)$ zeigen dann nicht die in der Fig. 5 gezeigten Rechteckimpulse, das Messprinzip bleibt jedoch qualitativ unverändert.

Weitere Details zur Funktionsweise eines Fluxgate Sensors können beispielsweise dem in der Zeitschrift *Sensors and Actuators* in den Banden A21 - A23 des Jahrganges 1990 auf den Seiten 799 - 802 veröffentlichten Artikel *Fluxgate Sensor in Planar Microtechnology* von Thomas Seitz entnommen werden.

Bei einer weiteren Messschaltung 13 ist die Messspule 11 in einer Reihen- oder Parallelschaltung zu einem kapazitiven Element mit der Kapazität C als Teil eines LC-Resonanzkreises in die Messschaltung 13 integriert. Die Messschaltung 13 enthält eine elektronische Schaltung, die den Resonanzkreis in Resonanz betreibt und ein Signal erzeugt, das proportional zur Resonanzfrequenz $\omega_R$ ist, bei der der Resonanzkreis schwingt. Bei einer genügend kleinen Stromdifferenz $\Delta I$ kommt der Torus 12 nicht in Sättigung und die Messspule 11 weist eine hohe Induktivität $L_1$ auf. Bei einer genügend hohen Stromdifferenz $\Delta I$ kommt der Torus 12 magnetisch in Sättigung und die Messspule 11 verhält sich wie eine Luftspule mit einer gegenüber dem Wert $L = L_1$ stark verkleinerten Induktivität $L = L_{1B}$. Da die Resonanzfrequenz gegeben ist durch

$$\omega_R = \omega_1 = 1/\sqrt{L_1 C}$$

im Normalfall bzw.

$$\omega_R = \omega_{1B} = 1/\sqrt{L_{1B} C}$$

bei einem Betrugsversuch ist ein Betrugsversuch leicht erkennbar. Die Messschaltung 13 ist eingerichtet zur Erzeugung eines Signales zum Öffnen der Schalter 6 und 7, wenn die Resonanzfrequenz $\omega_R$ einen vorbestimmten Wert überschreitet. Da die Resonanzfrequenz $\omega_R$ bei fest vorgegebenem Wert der Kapazität C nur von der Impedanz L der Messspule 11 abhängt, entspricht diese Messmethode einer Impedanzmessung.

Die bisher beschriebenen Lösungen zur Verhinderung des Telefonierens mit einem an die Telefonstation 1 (Fig. 1) als Schaltung 23 angeschlossenen Telefon beruhen auf der Verwendung eines magnetischen Materials, dessen Magnetisierungskurve im Bereich der zu messenden Stromdifferenz $\Delta I$ nicht linear ist, sondern Sättigungseffekte aufweist, die beispielsweise auf die vorgängig beschriebenen Arten zur Unterbrechung der Telefonverbindung bei einem Betrugsversuch ausnützbar sind. Im folgenden ist nun eine Lösung beschrieben, die das Telefonieren verhindert, wenn die Schaltung 23 eine Schaltung zur Unterdrückung der Taximpulse ist.

Die Spulen 8 und 9 sind in gegenläufigem Wicklungssinn gewickelt, so dass die Ströme $I_1$ und $I_2$ im Torus 12 ein Magnetfeld H erzeugen, das, wie vorgängig dargelegt, proportional zur Differenz der Ströme $I_1$-$I_2$ ist, wobei die Richtung der Ströme $I_1$ und $I_2$ in der Fig. 1 durch Pfeile definiert ist. Dabei spielt es keine Rolle, ob die Ströme $I_1$-$I_2$ Gleich- oder Wechselströme sind. Beide Spulen 8 und 9 zusammen weisen die Induktivität $L_{tot} = 0$ auf. Während der Wechselstromimpuls $h_1$ (Fig. 1) die gleiche Stromrichtung aufweist wie der Gleichstrom $I_1$, weist der Wechselstromimpuls $h_2$ eine bezüglich des Gleichstromes $I_2$ umgekehrte Stromrichtung auf. Die Spulen 8 und 9 stellen deshalb für die durch die Wechselstromimpulse $h_1$ und $h_2$ gebildeten Taximpulse eine nichtverschwindende Induktivität dar. Die Spulen 8, 9, der Torus 12 und die Messspule 11 verhalten sich deshalb bezüglich der Wechselstromimpulse $h_1$ und $h_2$ wie ein Transformator. Zur Beantwortung der Frage, ob eine die Taximpulse abschwächende oder sogar unterdrückende Schaltung 23 den Abgriff A mit Masse m verbindet, ist deshalb vorgesehen, die Eigenschaft der Impedanzwandlung des Transformators auszunutzen: Die Messschaltung 13 ist eingerichtet zur Bestimmung der Impedanz der Messspule 11, die in diesem Fall als Eingangsimpedanz $Z_{Te}$ des Transformators anzusehen ist. Die Eingangsimpedanz $Z_{Te}$ des Transformators ist abhängig von der Ausgangsimpedanz $Z_{Ta}$ des Transformators, welche bestimmt ist durch die Belastung des Transformators. Die Eingangsimpedanz $Z_{Te}$ hängt somit von der An- bzw. Abwesenheit der Schaltung 23 ab.

Eine Schaltung 13 zur Messung der Eingangsimpedanz des Transfromators ist in der Fig. 5 dargestellt. Sie weist einen Wechselspannungsgenerator 31, einen Widerstand 32, eine Spannungsmesseinrichtung 33 und eine Auswerteschaltung 34 auf. Der Wechselspannungsgenerator 31, der eine Spannung vorgegebener Amplitude und vorgegebener Frequenz $\omega_T$ erzeugt, und der Widerstand 32 sind in Reihe geschaltet und der Widerstand 32 ist hochohmig gegenüber der Eingangsimpedanz $Z_{Te}$ gewählt, so dass ein Wechselstrom vorgegebener Amplitude durch die Messspule 11 fliesst. Die Frequenz $\omega_T$ ist annähernd gleich der Frequenz der Wechselstromimpulse $h_1$ und $h_2$ gewählt, beträgt also etwa 50 Hz. Die Spannungsmesseinrichtung 28 misst die über der Messspule 11 liegende Wechselspannung und liefert eine Gleichspannung V an die Auswerteschaltung 34, die proportional ist zur Eingangsimpedanz $Z_{Te}$ des Transformators. Wie aus der Fig. 1 ersichtlich ist, ist die Ausgangsimpedanz $Z_{Ta}$ des durch die Spulen 8, 9, den Torus 12 und die Messspule 11 gebildeten Transformators auch abhängig von den Impedanzen, die in der Telefonzentrale 5 in den Linienleitungen 2 und 3 vorhanden sind. Die Telefonstation 1 ist deshalb vorzugsweise eingerichtet, bei der Inbetriebnahme oder auch periodisch die Eingangsimpedanz $Z_{Te}$ zu bestimmen und als Wert $Z_{Te, normal}$ in der Auswerteschaltung 34 zu speichern. Die Auswerteschaltung 34 bestimmt dann im Betrieb der Telefonstation 1, wenn die Schalter 6 und 7 geschlossen sind, in regelmässig oder stochastisch verteilten Zeitabdänden die Eingangsimpedanz $Z_{Te}$ und vergleicht sie mit dem gespeicherten Wert $Z_{Te, normal}$. Falls die Differenz $Z_{Te}$ - $Z_{Te, normal}$ einen vorbestimmten Wert überschreitet, erzeugt die Auswerteschaltung 34 ein Ausgangssignal, das das Öffnen der Schalter 6 und 7 bewirkt.

Hiermit sind die für das Verständnis der Erfindung wichtigen Sachverhalte prinzipiell beschrieben. Die Messschaltung nach der Fig. 2 und die Messschaltung nach der Fig. 5, die zur Feststellung unterschiedlicher Betrugsarten ausgelegt sind, können nun in fachmännischer Art kombiniert werden, so dass die Telefonstation eingerichtet ist, verschiedene Betrugsarten zu erkennen und zu verhindern.

**Patentansprüche**

1. Telefonstation (1) mit einem Hörer (14), einem ersten und einem zweiten Schalter (6, 7), mittels derer die Telefonstation (1) über zwei Leitungen (2, 3) mit einer Telefonzentrale (5) verbindbar ist, wobei die Telefonstation (1) bei geschlossenen Schaltern (6, 7) über die Leitungen (2, 3) von der Telefonzentrale (5) her mit elektrischer Energie speisbar ist, und mit einem Schaltungsteil (10), wobei der erste Schalter (6), das Schaltungsteil (10) und der zweite Schalter (7) elektrisch in Reihe geschaltet sind und wobei die Schalter (6, 7) durch den Hörer (14) der Telefonstation (1) betätigbar sind, **dadurch gekennzeichnet dass** zwischen dem ersten Schalter (6) und dem Schaltungsteil (10) eine erste Spule (8) eingebaut ist, dass zwischen dem Schaltungsteil (10) und dem zweiten Schalter (7) eine zweite Spule (9) eingebaut ist, dass die beiden Spulen (8, 9) in gegenläufigem Wicklungssinn um einen Körper (12) aus magnetischem Material gewickelt sind, dass Mittel (11, 13; 11, 26, 27) vorgesehen sind zur Erzeugung eines wechselförmigen Magnetfeldes ($H_M$(t); $H_F$(t)) im Körper (12), dass Mittel (11, 13; 11, 28, 29; 11, 28, 29, 30) vorgesehen sind zur Messung der zeitlichen Ableitung dB/dt der sich im Körper (12) einstellenden magnetischen Induktion B(t) und dass Mittel (13; 29) zur Erzeugung eines Signals zum Öffnen der Schalter (6, 7) vorgesehen sind, falls die gemessene Ableitung dB/dt vorbestimmte Kriterien erfüllt.

2. Telefonstation nach Anspruch 1, **dadurch gekennzeichnet dass** das magnetische Material annähernd eine Magnetisierungskurve B(H) aufweist, die für ein Magnetfeld H, dessen Betrag IHI kleiner als ein Wert $H_K$ ist, eine magnetische Permeabilität ($\mu_r$) aufweist, die gross gegen die Zahl Eins ist, und die für ein Magnetfeld H, dessen Betrag IHI grösser als der Wert $H_K$ ist, eine kleine magnetische Permeabilität ($\mu_r$) aufweist, dass der Übergangsbereich $\Delta H$ von der grossen zur kleinen Permeabilität ($\mu_r$) klein gegen den Wert $H_K$ ist und dass die Remanenz $B_r$ klein gegen den Sättigungswert B($H_K$) ist.

3. Telefonstation nach Anspruch 2, **dadurch gekennzeichnet dass** das magnetische Material ein Metallglas ist.

4. Telefonstation nach Anspruch 2 oder 3, **dadurch gekennzeichnet dass** die Mittel zur Erzeugung des wechselförmigen Magnetfeldes ($H_M$(t)) eine aus einem Wechselspannungsgenerator (26) und einem Widerstand (27) gebildete Wechselstromquelle ist, an die eine um den Körper (12) gewickelte Messspule (11) angeschlossen ist, und dass die Amplitude des Magnetfeldes ($H_M$(t)) klein gegen den Wert $H_K$ ist.

5. Telefonstation nach einem der Ansprüche 1 bis 3, **dadurch gekennzeichnet dass** die Mittel zur Erzeugung des wechselförmigen Magnetfeldes ($H_F$(t)) eine aus einem Wechselspannungsgenerator (26) und einem Widerstand (27) gebildete Wechselstromquelle ist, an die eine um den Körper (12) gewickelte Messspule (11) angeschlossen ist, und dass die Amplitude des wechselförmigen Magnetfeldes ($H_F$(t)) so gross ist, dass im Körper (12) magnetische Sättigungseffekte auftreten.

6. Telefonstation nach Anspruch 5, **dadurch gekennzeichnet dass** der durch die Messspule (11) fliessende Strom eine Grundfrequenz $\omega_F$ aufweist, und dass die Mittel (11, 13; 11, 28, 29, 30) zur Messung der zeitlichen Ableitung dB/dt eine Spannungsmesseinrichtung (28) und ein Bandpassfilter (30) umfassen das für die zweite Oberwelle mit der Frequenz 2*$\omega_F$ durchlässig ist.

7. Telefonstation (1) mit einem Hörer (14), einem ersten und einem zweiten Schalter (6, 7), mittels derer die Telefonstation (1) über zwei Leitungen (2, 3) mit einer Telefonzentrale (5) verbindbar ist, wobei die Telefonstation (1) bei geschlossenen Schaltern (6, 7) über die Leitungen (2, 3) von der Telefonzentrale (5) her mit elektrischer Energie speisbar ist, und mit einem Schaltungsteil (10), wobei der erste Schalter (6), das Schaltungsteil (10) und der zweite Schalter (7) elektrisch in Reihe geschaltet sind und wobei die Schalter (6, 7) durch den Hörer (14) der Telefonstation (1) betätigbar sind, **dadurch gekennzeichnet dass** zwischen dem ersten Schalter (6) und dem Schaltungsteil (10) eine erste Spule (8) eingebaut ist, dass zwischen dem Schaltungsteil (10) und dem zweiten Schalter (7) eine zweite Spule (9) eingebaut ist, dass die beiden Spulen (8, 9) in gegenläufigem Wicklungssinn um einen Körper (12) aus magnetischem Material gewickelt sind, dass eine dritte Spule als Messspule (11) um den Körper (12) gewickelt ist und dass in Abhängigkeit der Impedanz (L) der Messspule (11) ein Signal zum Öffnen der Schalter (6, 7) erzeugbar ist.

8. Telefonstation nach Anspruch 7, **dadurch gekennzeichnet dass** die Messspule (11) in einem Resonanzkreis angeordnet ist, dass Mittel (13) vorgesehen sind, die die Messspule (11) in Resonanz betreiben und die Resonanzfrequenz ($\omega_R$) bestimmen, wobei die Resonanzfrequenz ($\omega_R$) abhängig

ist von der Impedanz (L) der Messspule (11), und dass das Signal das Öffnen der Schalter (6, 7) bewirkt, wenn die Resonanzfrequenz ($\omega_R$) einen vorbestimmten Wert überschreitet.

9. Telefonstation nach Anspruch 7, **dadurch gekennzeichnet dass** eine Schaltung (31, 32, 33, 34) vorgesehen ist zur Bestimmung der Impedanz (L) der Messspule (11) bei der Frequenz ($\omega_T$) der Taximpulse.

10. Telefonstation nach einem der Ansprüche 1 bis 9, **dadurch gekennzeichnet dass** der magnetische Körper (12) ein Torus ist.

## Claims

1. A telephone station (1) comprising a handset (14), first and second switches (6, 7) by means of which the telephone station (1) can be connected by way of two lines (2, 3) to a telephone exchange (5), wherein the telephone station (1) can be fed with electrical energy from the telephone exchange (5) by way of the lines (2, 3) when the switches (6, 7) are closed, and comprising a circuit member (10), wherein the first switch (6), the circuit member (10) and the second switch (7) are electrically connected in series and wherein the switches (6, 7) are actuable by the handset (14) of the telephone station (1), characterised in that a first coil (8) is fitted between the first switch (6) and the circuit member (10), a second coil (9) is fitted between the circuit member (10) and the second switch (7), that the two coils (8, 9) are wound in opposite directions around a body (12) of magnetic material, that means (11, 13; 11, 26, 27) are provided for producing an alternating magnetic field ($H_M(t)$; $H_F(t)$) in the body (12), that means (11, 13; 11, 28, 29; 11, 28, 29, 30) are provided for measuring the time derivation dB/dt of the magnetic induction B(t) occurring in the body (12) and means (13; 29) are provided for producing a signal for opening the switches (6, 7) if the measured derivation dB/dt fulfils predetermined criteria.

2. A telephone station according to claim 1 characterised in that the magnetic material approximately has a magnetisation curve B(H) which for a magnetic field H whose magnitude IHI is less than a value $H_K$, has a magnetic permeability ($\mu_r$) which is large in relation to the number one and which for a magnetic field H whose magnitude IHI is greater than the value $H_K$, has low magnetic permeability ($\mu_r$), that the transitional range $\Delta_H$ from large to low permeability ($\mu_r$) is small relative to the value $H_K$ and that the remanence $B_r$ is low relative to the saturation value $B(H_K)$.

3. A telephone station according to claim 2 characterised in that the magnetic material is a metal glass.

4. A telephone station according to claim 2 or claim 3 characterised in that the means for producing the alternating magnetic field ($H_M(t)$) is an alternating current source which is formed from an ac voltage generator (26) and a resistor (27) and to which the measuring coil (11) which is wound around the body (12) is connected, and that the amplitude of the magnetic field ($H_M(t)$) is low relative to the value $H_K$.

5. A telephone station according to one of claims 1 to 3 characterised in that the means for producing the alternating magnetic field ($H_F(t)$) is an alternating current source which is formed from an ac voltage generator (26) and a resistor (27) and to which the measuring coil (11) which is wound around the body (12) is connected and that the amplitude of the alternating magnetic field ($H_F(t)$) is so great that magnetic saturation effects occur in the body (12).

6. A telephone station according to claim 5 characterised in that the current flowing through the measuring coil (11) has a basic frequency $\omega_F$ and that the means (11, 13; 11, 28, 29, 30) for measuring the time derivation dB/dt include a voltage measuring device (28) and a band pass filter (30) which is transmissive for the second harmonic at the frequency $2^*\omega_F$.

7. A telephone station (1) comprising a handset (14), first and second switches (6, 7) by means of which the telephone station (1) can be connected by way of two lines (2, 3) to a telephone exchange (5), wherein the telephone station (1) can be fed with electrical energy from the telephone exchange (5) by way of the lines (2, 3) when the switches (6, 7) are closed, and comprising a circuit member (10), wherein the first switch (6), the circuit member (10) and the second switch (7) are electrically connected in series and wherein the switches (6, 7) are actuable by the handset (14) of the telephone station (1), characterised in that a first coil (8) is fitted between the first switch (6) and the circuit member (10), a second coil (9) is fitted between the circuit member (10) and the second switch (7), the two coils (8, 9) are wound in opposite directions around a body (12) of magnetic material, a third coil is wound as a measuring coil (11) around the body (12) and a signal for opening the switches (6, 7) can be produced in dependence on the impedance (L) of the measuring coil (11).

8. A telephone station according to claim 7 characterised in that the measuring coil (11) is arranged in a resonance circuit, means are provided which drive the measuring coil (11) into resonance and deter-

mine the resonance frequency ($\omega_R$), wherein the resonance frequency ($\omega_R$) is dependent on the impedance (L) of the measuring coil (11), and the signal causes opening of the switches (6, 7) when the resonance frequency ($\omega_R$) exceeds a predetermined value.

9. A telephone station according to claim 7 characterised in that there is provided a circuit (31, 32, 33, 34) for determining the impedance (L) of the measuring coil (11) at the frequency ($\omega_T$) of the fee pulses.

10. A telephone station according to one of claims 1 to 9 characterised in that the magnetic body (12) is a torus.

**Revendications**

1. Poste téléphonique (1) comportant un écouteur (14), des premier et second interrupteurs (6,7), à l'aide desquels le poste téléphonique (1) peut être relié à un central téléphonique (5) par l'intermédiaire de deux lignes (2,3), le poste téléphonique (4) pouvant être alimenté avec une énergie électrique à partir du central téléphonique (5) par l'intermédiaire des lignes (2,3) lorsque les interrupteurs (6,7) sont fermés, et comportant une partie de circuit (10), le premier interrupteur (6), la partie de circuit (10) et le second interrupteur (7) sont branchés électriquement en série, tandis que les interrupteurs (6,7) peuvent être actionnés au moyen de l'écouteur (14) du poste téléphonique (1), caractérisé en ce qu'une première bobine (8) est montée entre le premier interrupteur (6) et la partie de circuit (10), qu'une seconde bobine (9) est montée entre la partie de circuit (10) et le second interrupteur (7), que les deux bobines (9) sont enroulées avec des sens d'enroulement opposés autour d'un corps (12) réalisé en un matériau magnétique, et que des moyens (11,13; 11,26,27) sont prévus pour produire un champ magnétique alternatif ($H_M(t)$; $H_F(t)$) dans le corps (12), que des moyens (11,13; 11,28,29; 11,28,29,30) sont prévus pour la mesure de la dérivée dans le temps dB/dt de l'induction magnétique B(t), qui s'établit dans le corps (12), et que des moyens (13,29) sont prévus pour la production d'un signal servant à ouvrir les interrupteurs (6,7), dans le cas où la dérivée dB/dt mesurée satisfait à des critères prédéterminés.

2. Poste téléphonique selon la revendication 1, caractérisé en ce que le matériau magnétique possède approximativement une course d'aimantation B(H) qui, pour un champ magnétique H, dont la valeur IHI est inférieure à une valeur $H_K$, possède une perméabilité magnétique ($\mu_r$) qui est élevée par rapport au nombre un, et qui, pour un champ magnétique H, dont la valeur absolue IHI est supérieure à la valeur $H_K$, possède une faible perméabilité magnétique ($\mu_r$), que la zone de transition $\Delta H$ faisant passer de la valeur élevée à la valeur faible de la perméabilité ($\mu_r$) est faible par rapport à la valeur $H_K$ et que la rémanence $B_r$ est faible par rapport à la valeur de saturation $B(H_K)$.

3. Poste téléphonique selon la revendication 2, caractérisé en ce que le matériau magnétique est un métal-verre.

4. Poste téléphonique selon la revendication 2 ou 3, caractérisé en ce que les moyens pour déterminer le champ magnétique alternatif ($H_M(t)$) sont une source de courant alternatif formée par un générateur de tension alternative (26) et une résistance (27) et à laquelle est raccordée une bobine de mesure (11), qui est enroulée autour du corps (12), et que l'amplitude du champ magnétique ($H_M(t)$) est faible par rapport à la valeur $H_K$.

5. Poste téléphonique selon l'une des revendications 1 à 3, caractérisé en ce que les moyens pour produire le champ magnétique alternatif ($H_F(t)$) sont une source de courant alternatif formée par un générateur de tension alternative (26) et une résistance (27) et à laquelle est raccordée une bobine de mesure (11) enroulée sur le corps (12), et que l'amplitude du champ magnétique alternatif ($H_F(t)$) est suffisamment élevée pour que les effets de saturation magnétique apparaissent dans le corps (12).

6. Poste téléphonique selon la revendication 5, caractérisé en ce que le courant circulant dans la bobine de mesure (11) possède une fréquence fondamentale $\omega_F$ et que les moyens (11,13; 11,28,29,30) servant à mesurer la dérivée dans le temps dB/dt comprennent un dispositif de mesure de tension (28) et un filtre passe-bande (30), qui transmet le second harmonique ayant pour fréquence $2^*\omega_F$.

7. Poste téléphonique (1) comportant un écouteur (14), des premier et second interrupteurs (6,7), à l'aide desquels le poste téléphonique (1) peut être relié à un central téléphonique (5) par l'intermédiaire de deux lignes (2,3), le poste téléphonique (4) pouvant être alimenté avec une énergie électrique à partir du central téléphonique (5) par l'intermédiaire des lignes (2,3) lorsque les interrupteurs (6,7) sont fermés, et comportant une partie de circuit (10), le premier interrupteur (6), la partie de circuit (10) et le second interrupteur (7) sont branchés électriquement en série, tandis que les interrupteurs (6,7) peuvent être actionnés au moyen de l'écouteur (14) du poste téléphonique (1), caractérisé en ce qu'une première bobine (8) est montée entre le premier interrupteur (6) et la partie de circuit (10), qu'une seconde bobine (9) est montée entre la partie de circuit (10) et le second interrupteur (7), que les deux bobines (9) sont enroulées avec des sens d'enroulement opposés autour d'un corps (12) réalisé en un matériau magnétique, et qu'une troisième bobine est enroulée en tant que bobine de mesure (11) autour du corps (12) et qu'un signal pour l'ouverture des interrupteurs (6,16) peut être produit en fonction de l'impédance (L) de la bobine de mesure (11).

8. Poste téléphonique selon la revendication 7, caractérisé en ce que la bobine de mesure (11) est disposée dans un circuit résonnant, qu'il est prévu des moyens (13) qui font fonctionner la bobine de mesure (11) à la résonance et déterminent la fréquence de résonance ($\omega_R$), la fréquence de résonance ($\omega_R$) dépendant de l'impédance (L) de la bobine de mesure (11), et que le signal déclenche l'ouverture des interrupteurs (6,7) lorsque la fréquence de résonance ($\omega_R$) dépasse une valeur prédéterminée.

9. Poste téléphonique selon la revendication 7, caractérisé en ce qu'il est prévu un circuit (31,32,33,34) pour déterminer l'impédance (L) de la bobine de mesure (11) pour la fréquence ($\omega_T$) des impulsions de taxation.

10. Poste téléphonique selon l'une des revendications 1 à 9, caractérisé en ce que le corps magnétique (12) est un tore.

Fig.1

Fig.2

Fig.5

## Fig. 3

## Fig. 4